# EUROPÄISCHE PATENTSCHRIFT

(11) **EP 3 158 283 B1**
(45) Veröffentlichungstag und Bekanntmachung des Hinweises auf die Patenterteilung: **08.01.2020**
(21) Anmeldenummer: 15731034.3
(22) Anmeldetag: 18.06.2015
(51) Int. Cl.: G01B 9/023, B23Q 17/24, B23Q 17/20, G01B 11/24

(54) **FERTIGUNGSSYSTEM UND VERFAHREN ZUM BETRIEB DES FERTIGUNGSSYSTEMS**
PRODUCTION SYSTEM AND METHOD OF OPERATING THE PRODUCTION SYSTEM
SYSTÈME DE FABRICATION ET PROCÉDÉ D'OPÉRATION DU SYSTÈME DE FABRICATION

(30) Priorität: 18.06.2014 DE 102014108629
(43) Veröffentlichungstag der Anmeldung: 26.04.2017
(73) Patentinhaber: Broetje-Automation GmbH, 26215 Wiefelstede (DE)
(72) Erfinder: FICKEN, Wilfried, 26180 Rastede (DE); WOLF, Bernd-Michael, 26180 Rastede (DE)
(74) Vertreter: Gottschald, Jan
(86) Internationale Anmeldenummer: PCT/EP2015/063777
(87) Internationale Veröffentlichungsnummer: WO 2015/193464

(56) Entgegenhaltungen:
- DE-A1- 19 859 679
- DE-A1-102005 023 353
- US-A- 4 753 555
- US-A- 4 861 984
- US-A- 5 329 691
- US-A- 5 339 152
- US-A1- 2007 153 296

## Beschreibung

Die vorliegende Erfindung betrifft ein Fertigungssystem für die Herstellung von Flugzeugstrukturbauteilen gemäß dem Oberbegriff von Anspruch 1 sowie ein Verfahren für den Betrieb eines solchen Fertigungssystems gemäß dem Oberbegriff von Anspruch 22.

Bei der Herstellung von Flugzeugstrukturbauteilen sind regelmäßig eine große Zahl von Nietverbindungen herzustellen, wobei die Herstellung dieser Nietverbindungen zunehmend automatisiert erfolgt. Hierfür dient das in Rede stehende Fertigungssystem, mit dem sich eine automatisierte Abfolge von Bohr- und Nietzyklen realisieren lässt. In der DE 198 59 679 A1 ist eine Messeinheit zur Erfassung von Holkörpern, wie beispielsweise Bohrungen, beschrieben.

In der US 5,329,691 ist ein kapazitives Messsystem beschrieben. In der US 5,339,152 wird holografische Inspektion der Oberfläche eines Bohrloches beschreiben und die US 4,753,555 beschreibt das Prüfen eines Bohrloches mittels eines Tastfingers. In der US 2007/0153296 A1 ist ein optisches Messsystem für Bohrlöcher beschrieben.

In der US 4,861,984 und der DE 10 2005 023 353 A1 werden optische Messverfahren für Bohrungen für bewegliche Teile wie Zylinder oder Ventile beschrieben.

Das bekannte Fertigungssystem (EP 0 600 614 A1), von dem die Erfindung ausgeht, ist mit einer Bohreinheit zur Erzeugung von Bohrungen in einem Materialpaket sowie mit einer Nieteinheit ausgestattet. Ferner weist das bekannte Fertigungssystem eine Messeinheit zur Ermittlung von Geometrieparametern für die Bohrung, im Einzelnen für die Ermittlung des jeweiligen Durchmessers der Bohrung, auf.

Die Messeinheit des bekannten Fertigungssystems ist als kapazitive Messeinheit ausgestaltet. Der dortige, kapazitive Messfühler wird in einem Messzyklus in einer vorbestimmten Messposition innerhalb der zu messenden Bohrung positioniert. Anschließend erfolgt die kapazitive Messung durch eine entsprechende Ansteuerung des kapazitiven Messfühlers. Der Messfühler ist entlang der Bohrungsachse in mehrere Abschnitte unterteilt. Die zu messenden Abschnitte sind durch die Geometrie des kapazitiven Messfühlers fest vorgegeben, so dass die Flexibilität des Fertigungssystems eingeschränkt ist.

Speziell im Hinblick auf die Anwendung im Bereich der Nietverbindungen von Flugzeugstrukturbauteilen ist das bekannte Fertigungssystem wenig vorteilhaft. Dies liegt zum einen daran, dass sich eine Bohrkontur entlang der Bohrungsachse nicht oder nur mit geringer Auflösung messen lässt. Beispielsweise sind die Geometrie einer Senkung oder die Position einer Trennebene zwischen zwei Materiallagen mit der Messeinheit des bekannten Fertigungssystems nicht oder nur ungenau ermittelbar.

Weiterhin problematisch bei dem bekannten Fertigungssystem ist die Tatsache, dass die Materiallagen in dem hier in Rede stehenden Bereich oftmals aus unterschiedlichen Materialien gebildet sind, was erheblichen Einfluss auf die Messgenauigkeit bei der Verwendung eines kapazitiven Messfühlers haben kann. Besonders deutlich wird dies bei einem Materialpaket, bei dem eine Materiallage als Faserverbundwerkstoff-Lage ausgelegt ist. Bei solchen Materialpaketen, die im Bereich der Flugzeugindustrie von wachsender Bedeutung sind, lässt sich die kapazitive Messeinheit des bekannten Fertigungssystems nicht anwenden.

Der Erfindung liegt das Problem zugrunde, das bekannte Fertigungssystem derart auszugestalten und weiterzubilden, dass die Ermittlung von Geometrieparametern für Bohrungen in Materialpaketen aus mindestens zwei Materiallagen im Hinblick auf Flexibilität und Messgenauigkeit verbessert wird.

Das obige Problem wird bei einem Fertigungssystem durch die Merkmale von Anspruch 1 gelöst.

Wesentlich ist die grundsätzliche Überlegung, dass eine punktuelle, optische Abtastung der Bohrungs-Innenfläche bei den hier in Rede stehenden Materialpaketen aus mindestens zwei Materiallagen besonders vorteilhaft ist.

Bei geeigneter Auslegung ist die Ermittlung der Geometrieparameter weitgehend materialunabhängig möglich, sofern die jeweilige Materialoberfläche eine hinreichende Reflektion des optischen Messstrahls gewährleistet. Damit sind auch unterschiedlichste Materialkombinationen innerhalb der Materialpakete unproblematisch.

Ferner erlaubt die punktuelle Abtastung der Bohrungs-Innenfläche eine nahezu unbegrenzte Flexibilität bei der Abtastung, sofern eine entsprechende Messbewegung vorgenommen wird.

Schließlich lässt sich in Querrichtung zu dem Messstrahl eine hohe Messauflösung realisieren, die wiedergibt, in welchem minimalen Abstand zwei in Querrichtung benachbarte Messpunkte noch unterscheidbar sind. Diese Messauflösung wird im Folgenden als "Flächenauflösung" bezeichnet. Die Voraussetzungen für eine hohe Flächenauflösung sind eine hohe Genauigkeit der Messbewegung sowie ein geringer Strahldurchmesser des Messstrahls.

Im Einzelnen wird nun vorgeschlagen, dass die Messeinheit eine Messelektronik mit einem optischen Sensorelement, eine Messoptik und eine Messlanze aufweist. Für die Ermittlung einer Entfernung zwischen der Messlanze und einem Messpunkt auf der Bohrungs-Innenfläche erzeugt die Messeinheit einen optischen Messstrahl, der über die Messoptik aus der Messlanze austritt und auf den Messpunkt auf der Bohrungs-Innenfläche trifft. Bei der Messeinheit handelt es sich hier und vorzugsweise um eine Interferometer-Anordnung, bei der die Ermittlung der jeweiligen Entfernung mit Hilfe von Lichtinterferenz erfolgt ("Fachlexikon-ABC Messtechnik", VGB Fachbuchverlag Leipzig 1985, ISBN 3-87 144-846-X, Seite 214). Eine solche Messeinheit kann beispielsweise aufgebaut sein wie in der DE 10 2005 023 353 A1 gezeigt.

Je nach Ausgestaltung der Messeinheit kann es sich bei den ermittelten Entfernungswerten um absolute Entfernungen oder lediglich um Entfernungsänderungen handeln. Im letztgenannten Fall kann es erforderlich sein, regelmäßig eine Kalibrierung der Messeinheit, beispielsweise durch eine Messung an einer Kalibrierbohrung, vorzunehmen.

Die obige, vorschlagsgemäße Abtastung wird in Messzyklen vorgenommen, in denen jeweils eine Messbewegung zwischen der Messlanze und dem Materialpaket vorgesehen ist. Während der Messbewegung ermittelt die Messeinheit zyklisch mit einer Abtastrate Entfernungswerte zu verschiedenen Messpunkten. Aus den Entfernungswerten wiederum ermittelt die Messeinheit mindestens einen Geometrieparameter für die Bohrung.

Bei der obigen Messbewegung handelt es sich um eine Relativbewegung zwischen Messlanze und Materialpaket. Hierfür kann eine Bewegung sowohl der Messlanze als auch des Materialpakets oder nur einer dieser Komponenten vorgesehen sein.

Vorschlagsgemäß sind die Messzyklen in einen Fertigungsablauf integriert. Damit ist es insbesondere möglich, innerhalb des Fertigungsablaufs und damit schnell auf Abweichungen in den ermittelten Geometrieparametern zu reagieren.

Vorzugsweise umfasst die Fertigungsprozeßsteuerung auch eine Toleranzabfrage der ermittelten Geometrieparameter im Hinblick auf vorbestimmte Toleranzkriterien. In Abhängigkeit von der Annäherung an die Toleranzkriterien oder von dem Über- oder Unterschreiten der Toleranzkriterien können seitens der Fertigungsprozeßsteuerung entsprechende Maßnahmen eingeleitet werden. Bei solchen Maßnahmen kann es sich beispielsweise um einen Bohrerwechsel, um eine Anpassung von Bohrparametern o. dgl. handeln.

Vorschlagsgemäß handelt es sich bei der Messbewegung, insbesondere bei der Messbewegung der Messlanze, um eine im Wesentlichen spiralförmige Bewegung derart, dass die Messpunkte auf einer im Wesentlichen spiralförmigen Messkurve liegen. Damit ist es mit einer einzigen, stetigen Bewegung möglich, die Bohrungs-Innenfläche über die gesamte Bohrungstiefe abzutasten. Die weiter bevorzugten Ausgestaltungen gemäß den Ansprüchen 10 bis 16 betreffen bevorzugte Varianten für Geometrieparameter, die aus den gemessenen Entfernungswerten ermittelt werden. Hier wird besonders deutlich, dass die vorschlagsgemäße Lösung einen hohen Grad an Flexibilität für die Ermittlung von Geometrieparametem mit sich bringt.

Aus den weiter bevorzugten Ausgestaltungen gemäß den Ansprüchen 17 und 18 wird deutlich, dass die einzelnen Materiallagen durch die vorschlagsgemäße Lösung gezielt und einzeln abgetastet werden können. Dies betrifft darüber hinaus die Möglichkeit eines Messzyklus, der auf den Bereich der Trennebene zwischen zwei Materiallagen und/oder auf den Bereich um die Trennebene zwischen zwei Materiallagen herum gerichtet ist.

Von besonderer Bedeutung ist der Gegenstand von Anspruch 19, der vorsieht, dass für unterschiedliche Messzyklen oder Teil-Messzyklen unterschiedliche Messparameter vorgesehen sein können. Beispielsweise können die Messzyklen in Grob-Messzyklen, die eine schnelle, jedoch ungenaue Messung ermöglichen, und in Fein-Messzyklen, die eine genaue, jedoch zeitaufwendige Messung ermöglichen, aufgeteilt werden. Mit der vorschlagsgemäßen Lösung ist es also möglich, eine hohe Messgenauigkeit nur vorzusehen, wenn diese wirklich benötigt ist. Damit lässt sich die Taktzeit bei einer automatisierten Fertigung reduzieren.

Nach einer weiteren Lehre gemäß Anspruch 22, der eigenständige Bedeutung zukommt, wird ein Verfahren für den Betrieb eines vorschlagsgemäßen Fertigungssystems beansprucht. Wesentlich ist die grundsätzliche Überlegung, die Messzyklen bei dem vorschlagsgemäßen Fertigungssystem wie oben angesprochen in den Fertigungsprozess zu integrieren. Auf alle Ausführungen zu der Betriebsweise der vorschlagsgemäßen Fertigungsprozeßsteuerung darf verwiesen werden.

Im Folgenden wird die Erfindung anhand einer lediglich ein Ausführungsbeispiel darstellenden Zeichnung näher erläutert. In der Zeichnung zeigt:
- Fig. 1: ein vorschlagsgemäßes Fertigungssystem in einer ganz schematischen Darstellung,
- Fig. 2: den Bereich des Bearbeitungskopfes des Fertigungssystems gemäß Fig. 1 in einer Detaildarstellung,
- Fig. 3: den Bearbeitungskopf gemäß Fig. 2 während eines Messzyklus in einer Schnittansicht entlang der Schnittlinie III-III, und
- Fig. 4: die Anordnung gemäß Fig. 3 mit angedeuteter Messbewegung der Messlanze a) bei spiralförmigem Messweg mit großer Spiralsteigung, b) bei spiralförmigem Messweg mit kleiner Spiralsteigung und c) bei spiralförmigem Messweg mit unterschiedlichen Spiralsteigungen.

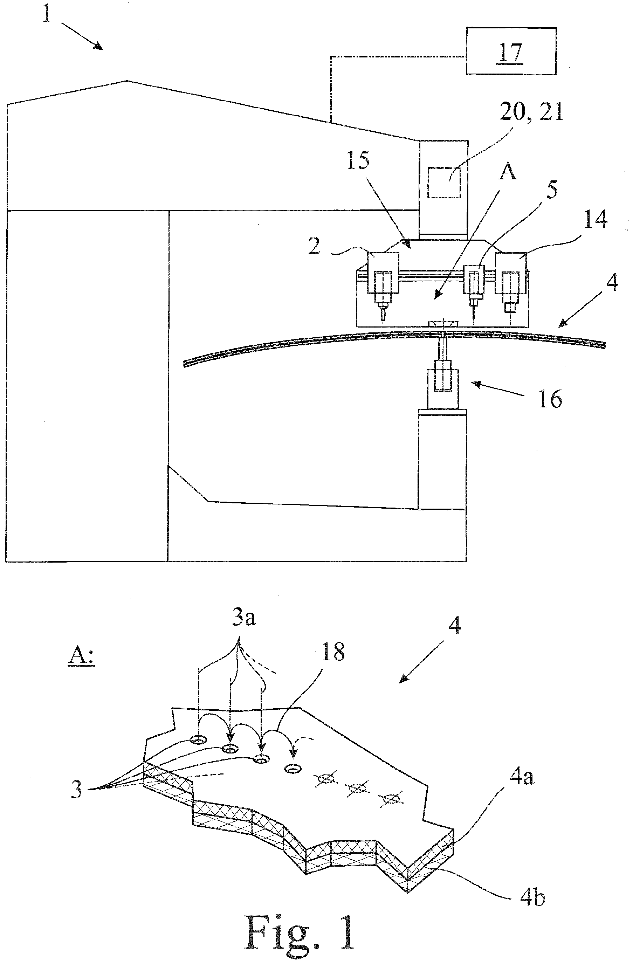

Das in Fig. 1 dargestellte Fertigungssystem 1 ist eingerichtet zum Herstellen von Nietverbindungen an Flugzeugstrukturbauteilen, hier insbesondere an Strukturbauteilen eines Rumpfes oder eines Flügels für ein Flugzeug. Entsprechend ist das Fertigungssystem 1 mit einer Bohreinheit 2 zur Erzeugung von Bohrungen 3 in einem Materialpaket 4 aus mindestens zwei Materiallagen 4a,4b für das Einsetzen von Befestigungselementen, hier von nicht dargestellten Nietelementen, ausgestattet. Während das Nieten selbst später erläutert wird, steht hier die Messung der Bohrungen 3 im Vordergrund. Hierfür ist eine Messeinheit 5 zur Ermittlung von Geometrieparametern für die erzeugten Bohrungen 3 vorgesehen.

Die Messeinheit 5 weist eine Messelektronik 6 mit einem optischen Sensorelement 7, eine Messoptik 8 und eine Messlanze 9 auf, wobei die Messeinheit 5 für die Ermittlung einer Entfernung 10 zwischen der Messlanze 9 und einem Messpunkt 11 auf der jeweiligen Bohrungs-Innenfläche 12 einen optischen Messstrahl 13 erzeugt, der über die Messoptik 8 aus der Messlanze 9 austritt und auf den Messpunkt 11 auf der jeweiligen Bohrungs-Innenfläche 12 trifft. Die Messeinheit 5 mit den oben genannten Komponenten ist hier und vorzugsweise, wie oben angedeutet, als Interferometer-Anordnung zur Entfernungsmessung, insbesondere als Weißlicht-Interferometer-Anordnung ausgestaltet. Denkbar ist aber auch, dass die Messeinheit als Laser-Interferometer-Anordnung ausgestaltet ist.

Vorschlagsgemäß ist in einem Messzyklus eine Messbewegung zwischen Messlanze 9 und Materialpaket 4 vorgesehen. Hier und vorzugsweise geht die Messbewegung auf eine Bewegung allein der Messlanze 9 zurück. Denkbar ist auch, dass sowohl die Messlanze 9 als auch das Materialpaket 4 für die Umsetzung der Messbewegung entsprechend bewegt werden. Während der Messbewegung ermittelt die Messeinheit 5 zyklisch mit einer Abtastrate Entfernungswerte zu verschiedenen Messpunkten 11, wobei aus den Entfernungswerten mittels der Messeinheit 5 mindestens ein Geometrieparameter für die zu messende Bohrung 3 ermittelt wird.

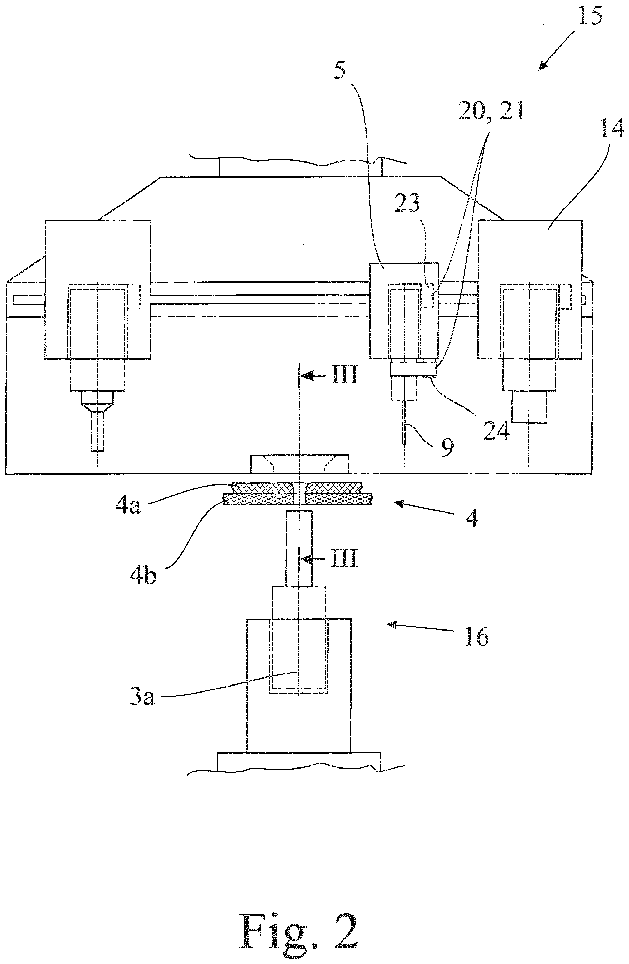

Hier und vorzugsweise weist das Fertigungssystem 1, wie oben angedeutet, zusätzlich eine Nieteinheit 14 zum Nieten des Materialpakets 4 auf. Dies ist schematisch der Darstellung gemäß Fig. 2 zu entnehmen.

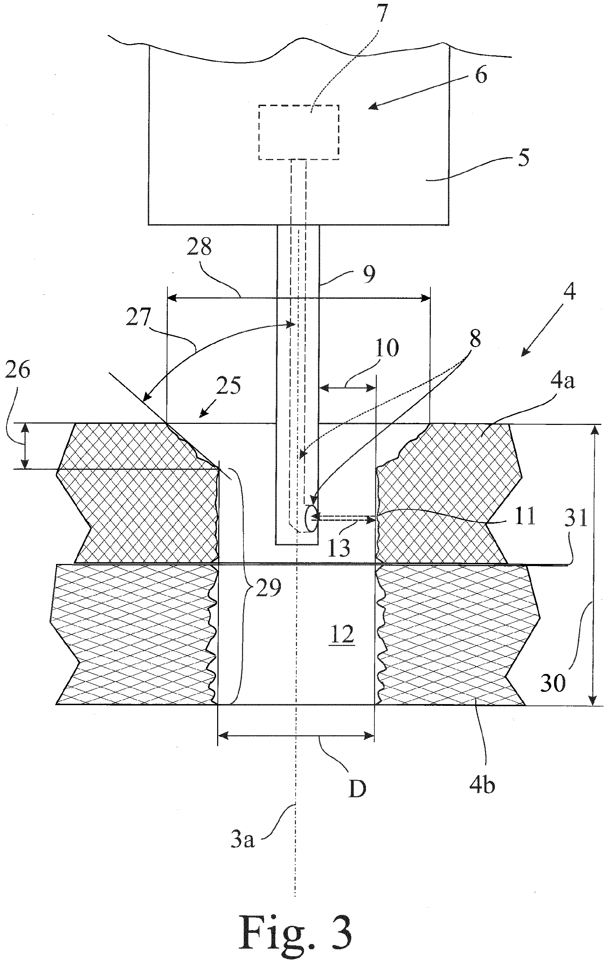

Fig. 3 zeigt, dass während eines Messzyklus die Messlanze 9 in die jeweils zu messende Bohrung 3 eintaucht, wobei der Messstrahl 13 im Wesentlichen quer zu der Bohrungsachse 3a verläuft.

Eine besonders kompakte Ausgestaltung des Fertigungssystems 1 ergibt sich dadurch, dass die Bohreinheit 2, die Messeinheit 5 und die hier und vorzugsweise vorgesehene Nieteinheit 14 zu einem Bearbeitungskopf 15 zusammengefasst sind. Der Bearbeitungskopf 15 stellt gewissermaßen ein Oberwerkzeug für die Bearbeitung des Materialpakets 4 dar. Fig. 2 zeigt ferner ein Unterwerkzeug 16, das bei der Herstellung der Nietverbindung mit der dem Oberwerkzeug zugeordneten Nieteinheit 14 zusammenwirkt.

Fig. 1 zeigt ganz schematisch eine Fertigungsprozeßsteuerung 17 für die Ansteuerung der Komponenten des Fertigungssystems 1. Hier und vorzugsweise handelt es sich bei der Fertigungsprozeßsteuerung 17 um eine zentrale Steuerung. Denkbar ist aber auch, dass die Fertigungsprozeßsteuerung 17 dezentral, also verteilt angeordnet ist.

Die Fertigungsprozeßsteuerung 17 arbeitet durch eine Ansteuerung der Komponenten des Fertigungssystems 1 nach einer Fertigungsvorschrift eine Abfolge von Bohrzyklen und hier und vorzugsweise auch Nietzyklen und nach einer Messvorschrift zwischen vorbestimmten Bohrzyklen bzw. Nietzyklen vorbestimmte Messzyklen ab. Die Abfolge von Bohr- bzw. Nietzyklen ist in Fig. 1 durch die Pfeile mit dem Bezugszeichen 18 angedeutet. Gestrichelt angedeutet sind dabei Bohrpositionen, die noch nicht angefahren worden sind.

Ein Beispiel für eine Fertigungsvorschrift ist das sequentielle Bohren und Nieten der in Fig. 1 in einer Reihe angeordneten Bohrungen 3. Eine Messvorschrift kann beispielsweise darin bestehen, nach jedem dritten Bohrzyklus einen Messzyklus vorzunehmen, bevor der entsprechende Nietzyklus vorgenommen wird.

Hier nicht dargestellt ist eine Klemmvorrichtung, welche die Materiallagen 4a,4b des Materialpakets 4 derart zusammendrückt, dass sich in der Trennebene keine Spalte oder nur kleine Spalten ausbilden können. Eine solche Klemmvorrichtung ist regelmäßig mit einer am Bearbeitungskopf 15 angeordneten, oberen Druckstempelbuchse und mit einer am Unterwerkzeug 16 angeordneten, unteren Druckstempelbuchse ausgestattet.

Insgesamt ergibt sich mit dem vorschlagsgemäßen Fertigungssystem für jede Bohrung 3 folgender Ablauf: Zunächst wird der jeweils benötigte Bohrer ausgewählt und über ein Bohrerwechselsystem in die Bohreinheit 2 eingewechselt. Ferner wird das entsprechende Niet ausgewählt und zu der Nieteinheit 14 transportiert. Anschließend wird das Materialpaket 4 mittels der Klemmanordnung geklemmt. Darauf folgt ein Bohrzyklus mittels der Bohreinheit 2, der regelmäßig aus den Arbeitsgängen Bohren und Senken besteht. Je nach Messvorschrift folgt nun ein Messzyklus, um mindestens einen Geometrieparameter der erzeugten Bohrung 3 zu ermitteln. Grundsätzlich kann es hier vorgesehen sein, dass das Niet erst zu diesem Zeitpunkt ausgewählt wird, da die Auswahl des Nietes von den ermittelten Geometrieparametern abhängen kann. Es folgt ein Nietzyklus mittels der Nieteinheit 14, der sich aus dem Einsetzen des Nietes in die Bohrung 3 und dem Umformen des Nietes zusammensetzt. Abschließend wird mit einem weiteren, hier nicht dargestellten, vorzugsweise optischen Messsystem der Setzkopfüberstand und die Parallelität des Nietkopfes zu der Oberfläche des Materialpaketes 4 geprüft.

Die im Rahmen eines Messzyklus vorzunehmende Messbewegung weist vorzugsweise einen rotatorischen Anteil auf, der weiter vorzugsweise eine Rotationsbewegung um die Längsachse der Messlanze 9 ist. Hier und vorzugsweise weist die Messbewegung zusätzlich einen linearen Anteil auf, der weiter vorzugsweise in Richtung der Längsachse der Messlanze 9 ausgerichtet ist.

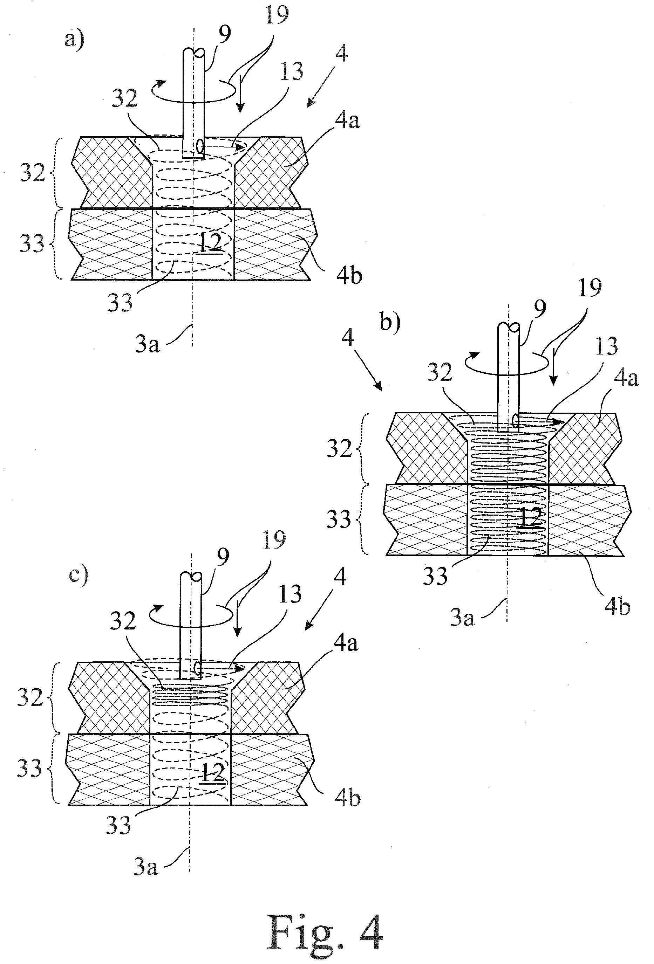

Im Ergebnis ergibt sich, dass die Messbewegung hier eine im Wesentlichen spiralförmige Bewegung ist, derart, dass die Messpunkte auf der Bohrungs-Innenwand 12 auf einer im Wesentlichen spiralförmigen Messkurve liegen. Die spiralförmige Bewegung ist in Fig. 4 mit den Bezugszeichen 19 angedeutet.

Um eine automatisierte Fertigung zu gewährleisten ist vorzugsweise eine Antriebsanordnung 20 für die motorische Bewegung der Bohreinheit 2 und/oder der Messeinheit 5 und/oder der hier und vorzugsweise vorgesehenen Nieteinheit 14 vorgesehen. Dabei ist der Antriebsanordnung 20 zunächst einmal eine Kopf-Antriebsanordnung 21 mit mindestens einem Antrieb für die motorische Positionierung des Bearbeitungskopfes 15 zugeordnet. Die Kopf-Antriebsanordnung 21 kann ein- oder mehrachsig vorgesehen sein und ist in Fig. 1 lediglich angedeutet.

Hier und vorzugsweise umfasst die Antriebsanordnung 20 auch einen Antrieb für die Verstellung der Bohreinheit 2, der Messeinheit 5 und der Nieteinheit 14 relativ zu dem Bearbeitungskopf 15 selbst. Damit lassen sich die Bohreinheit 2, die Messeinheit 5 und die Nieteinheit 14 jeweils aus den dargestellten Parkpositionen, in Fig. 2 jeweils durch eine seitliche Bewegung, in eine Betriebsposition verstellen. Hier und vorzugsweise befindet sich die Betriebsposition in einem mittleren Bereich des Bearbeitungskopfes 15.

Weiter ist es hier und vorzugsweise so, dass der Antriebsanordnung 20 eine Mess-Antriebsanordnung 22 mit mindestens einem Antrieb 23, 24 für die motorische Positionierung der Messlanze 9 zugeordnet ist. Hier und vorzugsweise ist es so, dass die Mess-Antriebsanordnung 22 einen Antrieb 23 für den obigen, linearen Anteil der Messbewegung und einen Antrieb 24 für den obigen, rotatorischen Anteil der Messbewegung aufweist. Mit den beiden Antrieben 23,24 ist eine motorische Verstellung der Messlanze 9 relativ zu dem Bearbeitungskopf 15 möglich.

Grundsätzlich kann es vorgesehen sein, dass ein Antrieb der Antriebsanordnung 20 doppelt genutzt wird, nämlich sowohl als Kopf-Antriebsanordnung 21 als auch als Mess-Antriebsanordnung 22. Dies gilt grundsätzlich für die Kopf-Antriebsanordnung 21, sofern, wie dargestellt, die Messeinheit 5 am Bearbeitungskopf 15 angeordnet ist und damit die Messeinheit 5 mittels der Kopf-Antriebsanordnung 21 bewegbar ist.

Aus den in einem Messzyklus gewonnenen Entfernungsdaten lassen sich zahlreiche unterschiedliche Geometrieparameter für die jeweils zu messende Bohrung 3 ermitteln.

In einer bevorzugten Variante handelt es sich bei dem Geometrieparameter um den Durchmesser D oder die Rundheit der Bohrung 3. Insbesondere für den Fall, dass die Messlanze 9 mindestens eine volle Umdrehung bei gleichzeitiger Abtastung der Bohrungs-Innenfläche 12 vollzogen hat, lässt sich aus den ermittelten Entfernungsdaten auf bekannte Weise der Durchmesser der Bohrung 3 berechnen.

Für den Fall, dass während des Bohrzyklus eine Senkung 25 (Fig. 3) erzeugt worden ist, kann ein Geometrieparameter die Senkungstiefe 26 oder der Senkungswinkel 27 oder der Senkungsdurchmesser 28 für die jeweilige Bohrung 3 sein. Für die Ermittlung von Senkungstiefe 26 und Senkungswinkel 27 kann grundsätzlich auf eine Rotation der Messlanze 9 verzichtet werden. Hier ist lediglich eine Messbewegung in Richtung der Messlanze 9 bei gleichzeitiger Abtastung erforderlich. Für die Ermittlung des Senkungsdurchmessers dagegen ist die Messlanze am oberen Rand der Senkung 25 zu positionieren und anschließend in Rotation zu versetzen. Dadurch, dass die Oberfläche der Senkung 25 keine ideal spiegelnde Oberfläche ist, lässt sich in der Regel mit dem quer zu der Bohrungsachse 3a verlaufenden Messstrahl 13 regelmäßig eine Entfernungsmessung durchführen. Denkbar ist aber auch, dass aus der Senkungstiefe 26 und dem Senkungswinkel 27 auf den Senkungsdurchmesser 28 geschlossen wird.

Es darf darauf hingewiesen werden, dass während des Messzyklus die Messlanze 9 vorzugsweise auf die Bohrungsachse 3a ausgerichtet ist. Dies trifft insbesondere auf alle Messzyklen zu, bei denen aus den Entfernungsdaten auf Durchmesserwerte geschlossen werden soll.

Für den oben angesprochenen Fall, dass die Bohrung 3 mit einer Senkung 25 ausgestattet ist, kommt dem Übergang von der Senkung 25 auf den Bohrungsschaft 29, also den zylindrischen Teil der Bohrung 3, ganz besondere Bedeutung zu. Von diesem Übergang, insbesondere dem dortigen Übergangsradius, lassen sich Indizien für den Bohrerverschleiß ablesen. Entsprechend betrifft ein bevorzugter Geometrieparameter für die Bohrung 3 vorzugsweise den Übergang von der Senkung 25 auf den Bohrungsschaft 29.

Auch die Oberflächenbeschaffenheit, insbesondere die Oberflächenstruktur, der Bohrungs-Innenfläche 12 kann Aufschluss über den Bohrerverschleiß geben. Entsprechend ist es hier und vorzugsweise so, dass ein Geometrieparameter die Oberflächenbeschaffenheit, insbesondere die Oberflächenstruktur, der Bohrungs-Innenfläche 12 ist.

Besonders für die Nietauswahl kann die Paketstärke 30 des Materialpakets 4 entlang der Bohrungsachse 3a, die auch als "Klemmlänge" bezeichnet wird, von Bedeutung sein. Die Paketstärke 30 lässt sich wiederum durch eine rein lineare Bewegung der Messlanze 9 ermitteln.

Ein weiterer bevorzugter Geometrieparameter, der sich mit einer rein linearen Messbewegung ermitteln lässt, ist die Lage der Trennebene 31 zwischen zwei Materiallagen 4a,4b des Materialpakets 4.

Schließlich ist ein bevorzugter Geometrieparameter die Breite eines ggf. zwischen zwei Materiallagen 4a,4b des Materialpakets 4 vorhandener Spalt. Ein solcher Spalt lässt sich mit einer geeigneten Messbewegung beispielsweise auf seine Existenz/Nichtexistenz hin abtasten.

Interessant bei der obigen, die Geometrieparameter betreffenden Diskussion ist die Tatsache, dass eine Reihe von Geometrieparametern, insbesondere die Ermittlung von Durchmessern, eine rotatorische Bewegung der Messlanze 9 erfordern, während andere Geometrieparameter, beispielsweise die Ermittlung der Paketstärke 30, lediglich eine lineare Messbewegung der Messlanze 9 erfordern. Insoweit stellt sich die weiter oben angesprochene, spiralförmige Messbewegung als universell und insoweit vorteilhaft dar, da jeder oben genannte Geometrieparameter bei geeigneter Auslegung der spiralförmigen Messbewegung mit nur einer einzigen Messbewegung ermittelbar ist.

Grundsätzlich kann es vorgesehen sein, dass ein Messzyklus stets auf alle Materiallagen 4a,4b gerichtet ist. Es kann aber auch vorteilhaft sein, dass ein Messzyklus nur auf einen Teil der Materiallagen 4a,4b, insbesondere sogar nur auf eine einzige Materiallage 4a,4b gerichtet ist. Der letztgenannte Fall kann aus Taktzeitgründen vorteilhaft sein. Die Formulierung "gerichtet" beschreibt hier, welcher Bereich, insbesondere welche Materiallagen 4a, 4b, abgetastet werden.

Ein Messzyklus kann auch zwei oder mehr Teil-Messzyklen 32,33 umfassen, die nacheinander abgearbeitet werden, wobei die Geometrieparameter für die Teil-Messzyklen 32,33 jeweils separat ermittelt werden. Dies ist insbesondere vorteilhaft, wenn die Teil-Messzyklen 32,33 jeweils auf eine unterschiedliche Materiallage 4a,4b des Materialpakets 4 gerichtet sind. Bei den in Fig. 4 angedeuteten Messzyklen sind jeweils zwei Teil-Messzyklen 32,33 vorgesehen, die unmittelbar nacheinander durchgeführt werden. Dabei schließt sich die Messbewegung des ersten Teil-Messzyklus 32 unmittelbar und stetig an die Messbewegung des zweiten Teil-Messzyklus 33 an. Hier und vorzugsweise sind beide Messbewegungen spiralförmig ausgelegt. Sie gehen nahtlos ineinander über.

In Fig. 4 sind die Teil-Messzyklen 32,33 anhand der räumlichen Ausdehnung derer Messkurven angedeutet. Es lässt sich der Darstellung gemäß Fig. 4 entnehmen, dass der obere Teil-Messzyklus 32 auf die obere Materiallage 4a und der untere Teil-Messzyklus 33 auf die untere Materiallage 4b gerichtet ist. Damit lassen sich die Geometrieparameter für die einzelnen Materiallagen 4a,4b auf einfache Weise separat voneinander ermitteln.

Ein Vergleich der Fig. 4a mit der Fig. 4b ergibt, dass es möglich ist, bei zwei unterschiedlichen Messzyklen die Messparameter unterschiedlich vorzusehen. Bei den Messparametern kann es sich um die Geometrie der Messbewegung und/oder die Geschwindigkeiten der Messbewegungen und/oder die Abtastraten handeln. Andere Messparameter sind denkbar. Grundsätzlich ist eine Änderung der Messparameter von einem Teil-Messzyklus 32 zu einem anderen Teil-Messzyklus 33 möglich. Gründe für die Änderung der Messparameter können Taktzeitanforderungen, Genauigkeitsanforderungen o. dgl. sein.

Ganz allgemein kann es auch vorgesehen sein, dass die obigen Messparameter innerhalb eines Messzyklus, also sogar innerhalb eines Teil-Messzyklus unterschiedlich sind.

Die vorschlagsgemäße Lösung erlaubt, wie schon angedeutet, eine Einstellung der Flächenauflösung der Messeinheit 5. In einem Messzyklus definieren die Abstände zwischen benachbarten Messpunkten 11 auf der Bohrungs-Innenfläche 12 die Flächenauflösung der Messeinheit 5 für diesen Messzyklus. Die Flächenauflösung ist durch eine Abstimmung der Messbewegung, insbesondere der Geschwindigkeit der Messbewegung entlang einer Messkurve auf der Bohrungs-Innenfläche 12, auf die Abtastrate einstellbar. Hier und vorzugsweise ist es so, dass innerhalb eines Messzyklus oder bei mindestens zwei unterschiedlichen Messzyklen oder Teil-Messzyklen die Flächenauflösungen unterschiedlich eingestellt sind.

Aus den obigen Ausführungen wird deutlich, dass die vorschlagsgemäße Lösung, insbesondere durch die Aufteilung der Messzyklen in Teil-Messzyklen 32,33 eine nahezu unbegrenzte Flexibilität bei der Ermittlung von Geometrieparametern für die zu messende Bohrung 3 bereitstellt.

Nach einer weiteren Lehre, der ebenfalls eigenständige Bedeutung zukommt, wird ein Verfahren für den Betrieb eines vorschlagsgemäßen Fertigungssystems 1 beansprucht.

Wesentlich ist, dass eine Fertigungsprozeßsteuerung 17 für die Ansteuerung der Komponenten des Fertigungssystems 1 vorgesehen ist, und dass mittels der Fertigungsprozeßsteuerung 17 durch eine Ansteuerung der Komponenten des Fertigungssystems 1 nach einer Fertigungsvorschrift eine Abfolge von Bohrzyklen und ggfs. Nietzyklen und nach einer Messvorschrift zwischen vorbestimmten Bohrzyklen bzw. Nietzyklen vorbestimmte Messzyklen abgearbeitet werden. Auf alle Ausführungen zu dem Betrieb des vorschlagsgemäßen Fertigungssystems 1 darf verwiesen werden.

In einer besonders vorteilhaften Ausführung des Verfahrens, bei dem die Vorzüge des Fertigungssystems 1 voll ausgeschöpft werden, ist es vorgesehen, dass zumindest ein Teil der Materiallagen 4a,4b aus unterschiedlichen Materialien gebildet sind. In besonders bevorzugter Ausgestaltung ist mindestens eine Materiallage 4a,4b aus einem nichtmetallischen Material, vorzugsweise aus einem Faserverbundmaterial, gebildet. Angesichts der optischen Messeinheit 5 lassen sich auch nichtmetallische Materiallagen 4a,4b ohne weiteres messen. Dies macht die vorschlagsgemäße Lösung insbesondere für alle Arten von Verbundmaterialien attraktiv.

## Patentansprüche

1. Fertigungssystem für die Herstellung von Flugzeugstrukturbauteilen, mit einer Bohreinheit (2) zur Erzeugung von Bohrungen (3) in einem Materialpaket (4) aus mindestens zwei Materiallagen (4a,4b) für das Einsetzen von Befestigungselementen, insbesondere von Nietelementen, und mit einer Messeinheit (5) zur Ermittlung mindestens eines Geometrieparameters für eine zuvor erzeugte Bohrung (3), wobei die Messeinheit (5) eine Messelektronik (6) mit einem optischen Sensorelement (7), eine Messoptik (8) und eine Messlanze (9) aufweist,
wobei die Messeinheit (5) dazu eingerichtet ist, für die Ermittlung einer Entfernung (10) zwischen der Messlanze (9) und einem Messpunkt (11) auf der jeweiligen Bohrungs-Innenfläche (12) einen optischen Messstrahl (13) zu erzeugen, der über die Messoptik (8) aus der Messlanze (9) austritt und auf den Messpunkt (11) auf der jeweiligen Bohrungs-Innenfläche (12) trifft, wobei in einem Messzyklus eine Messbewegung zwischen Messlanze (9) und Materialpaket (4) vorgesehen ist und die Messeinheit (5) dazu eingerichtet ist, während der Messbewegung zyklisch mit einer Abtastrate Entfernungswerte zu verschiedenen Messpunkten (11) zu ermitteln und aus den Entfernungswerten mindestens einen Geometrieparameter für die jeweilige Bohrung (3) zu ermitteln, wobei die Messbewegung (19) eine im Wesentlichen spiralförmige Bewegung ist, derart, dass die Messpunkte auf einer im Wesentlichen spiralförmigen Messkurve liegen,
wobei eine Fertigungsprozeßsteuerung (17) für die Ansteuerung der Komponenten des Fertigungssystems (1) vorgesehen ist, wobei die Fertigungsprozeßsteuerung (17) dazu eingerichtet ist, durch eine Ansteuerung der Komponenten des Fertigungssystems (1) nach einer Fertigungsvorschrift eine Abfolge von Bohrzyklen mittels der Bohreinheit (2) und nach einer Messvorschrift zwischen vorbestimmten Bohrzyklen vorbestimmte Messzyklen abzuarbeiten und
wobei ein Messzyklus nur auf einen Teil der Materiallagen (4a,4b), vorzugsweise nur auf eine einzige Materiallage (4a,4b), gerichtet ist, oder,
wobei ein Messzyklus mindestens zwei Teil-Messzyklen (32,33) umfasst und wobei ein Teil-Messzyklus (32) auf eine Materiallage (4a) des Materialpakets (4) gerichtet ist und wobei ein weiterer Teil-Messzyklus (33) auf eine weitere Materiallage (4b) des Materialpakets (4) gerichtet ist.

2. Fertigungssystem nach Anspruch 1, **dadurch gekennzeichnet, dass** das Fertigungssystem (1) eine Nieteinheit (14) zum Nieten des Materialpakets (4) aufweist.

3. Fertigungssystem nach Anspruch 1 oder 2, **dadurch gekennzeichnet, dass** während eines Messzyklus die Messlanze (9) in die jeweilige Bohrung (3) eintaucht und der Messstrahl (13) im Wesentlichen quer zu der Bohrungsachse (3a) verläuft.

4. Fertigungssystem nach einem der vorhergehenden Ansprüche, **dadurch gekennzeichnet, dass** die Bohreinheit (2) und die Messeinheit (5) zu einem Bearbeitungskopf (15) zusammengefasst sind, vorzugsweise, dass die Bohreinheit (2), die Nieteinheit (14) und die Messeinheit (5) zu einem Bearbeitungskopf (15) zusammengefasst sind.

5. Fertigungssystem nach einem der vorhergehenden Ansprüche, **dadurch gekennzeichnet, dass** die Fertigungsprozeßsteuerung (17) durch eine Ansteuerung der Komponenten des Fertigungssystems (1) nach einer Fertigungsvorschrift eine Abfolge von Bohrzyklen mittels der Bohreinheit (2) und Nietzyklen mittels der Nieteinheit (14) und nach einer Messvorschrift zwischen vorbestimmten Bohrzyklen bzw. Nietzyklen vorbestimmte Messzyklen abarbeitet.

6. Fertigungssystem nach einem der vorhergehenden Ansprüche, **dadurch gekennzeichnet, dass** die Messbewegung (19) einen rotatorischen Anteil aufweist, vorzugsweise, dass der rotatorische Anteil eine Rotationsbewegung um die Längsachse der Messlanze (9) ist.

7. Fertigungssystem nach einem der vorhergehenden Ansprüche, **dadurch gekennzeichnet, dass** die Messbewegung (19) einen linearen Anteil aufweist, vorzugsweise, dass der lineare Anteil in Richtung der Längsachse der Messlanze (9) ausgerichtet ist.

8. Fertigungssystem nach einem der vorhergehenden Ansprüche, **dadurch gekennzeichnet, dass** eine Antriebsanordnung (20) für die motorische Bewegung der Bohreinheit (2) und/oder der Messeinheit (5) und/oder einer ggf. vorgesehenen Nieteinheit (14) vorgesehen ist.

9. Fertigungssystem nach Anspruch 8, **dadurch gekennzeichnet, dass** der Antriebsanordnung (20) eine Kopf-Antriebsanordnung (21) mit mindestens einem Antrieb für die motorische Positionierung des Bearbeitungskopfs (15) relativ zu dem Materialpaket (4) zugeordnet ist.

10. Fertigungssystem nach einem der vorhergehenden Ansprüche, **dadurch gekennzeichnet, dass** ein Geometrieparameter der Durchmesser (D) oder die Rundheit der jeweiligen Bohrung (3) ist.

11. Fertigungssystem nach einem der vorhergehenden Ansprüche, **dadurch gekennzeichnet, dass** die jeweilige Bohrung (3) eine Senkung (25) aufweist und dass ein Geometrieparameter die Senkungstiefe (26) oder der Senkungswinkel (27) oder der Senkungsdurchmesser (28) für die Bohrung (3) ist.

12. Fertigungssystem nach einem der vorhergehenden Ansprüche, **dadurch gekennzeichnet, dass** die jeweilige Bohrung (3) eine Senkung (25) aufweist dass ein Geometrieparameter den Übergang, insbesondere einen Übergangsradius, von der Senkung (25) auf den sich an die Senkung (25) anschließenden Bohrungsschaft (29) betrifft.

13. Fertigungssystem nach einem der vorhergehenden Ansprüche, **dadurch gekennzeichnet, dass** ein Geometrieparameter die Oberflächenbeschaffenheit, insbesondere die Oberflächenstruktur, der Bohrungs-Innenfläche (12) ist.

14. Fertigungssystem nach einem der vorhergehenden Ansprüche, **dadurch gekennzeichnet, dass** ein Geometrieparameter die Paketstärke (30) des Materialpakets (4) entlang der Bohrungsachse (3a) ist.

15. Fertigungssystem nach einem der vorhergehenden Ansprüche, **dadurch gekennzeichnet, dass** ein Geometrieparameter die Lage der Trennebene (31) zwischen zwei Materiallagen (4a,4b) des Materialpakets (4) ist.

16. Fertigungssystem nach einem der vorhergehenden Ansprüche, **dadurch gekennzeichnet, dass** ein Geometrieparameter die Breite eines zwischen zwei Materiallagen (4a,4b) des Materialpakets (4) ggf. vorhandenen Spalts ist.

17. Fertigungssystem nach einem der vorhergehenden Ansprüche, **dadurch gekennzeichnet, dass** die Teil-Messzyklen (32,33) nacheinander abgearbeitet werden und dass die Geometrieparameter für die Teil-Messzyklen (32,33) jeweils separat ermittelt werden.

18. Fertigungssystem nach einem der vorhergehenden Ansprüche, **dadurch gekennzeichnet, dass** mindestens zwei Teil-Messzyklen (32,33) unmittelbar nacheinander durchgeführt werden, vorzugsweise, dass die Messbewegung eines ersten Teil-Messzyklus (32) sich unmittelbar und stetig an die Messbewegung eines zweiten Teil-Messzyklus (33) anschließt.

19. Fertigungssystem nach einem der vorhergehenden Ansprüche, **dadurch gekennzeichnet, dass** bei mindestens zwei unterschiedlichen Messzyklen oder Teil-Messzyklen (32,33) die Messparameter, insbesondere die Geometrien der Messbewegungen und/oder die Geschwindigkeiten der Messbewegungen und/oder die Abtastraten, unterschiedlich sind.

20. Fertigungssystem nach einem der vorhergehenden Ansprüche, **dadurch gekennzeichnet, dass** in einem Messzyklus die Abstände zwischen benachbarten Messpunkten (11) auf der Bohrungs-Innenfläche (12) die Flächenauflösung der Messeinheit (5) für diesen Messzyklus definieren, dass die Flächenauflösung durch eine Abstimmung der Messbewegung, insbesondere der Geschwindigkeit der Messbewegung entlang einer Messkurve auf der Bohrungs-Innenfläche (12), auf die Abtastrate einstellbar ist und dass innerhalb eines Messzyklus oder bei mindestens zwei unterschiedlichen Messzyklen oder Teil-Messzyklen die Flächenauflösungen unterschiedlich eingestellt sind.

21. Fertigungssystem nach einem der vorhergehenden Ansprüche, **dadurch gekennzeichnet, dass** innerhalb eines Messzyklus die Messparameter, insbesondere die Geometrie der Messbewegung und/oder die Geschwindigkeit der Messbewegung und/oder die Abtastraten, unterschiedlich sind.

22. Verfahren zum Betrieb eines Fertigungssystems (1) nach einem der vorhergehenden Ansprüche,
**dadurch gekennzeichnet,**
**dass** eine Fertigungsprozeßsteuerung (17) für die Ansteuerung der Komponenten des Fertigungssystems (1) vorgesehen ist und dass mittels der Fertigungsprozeßsteuerung (17) durch eine Ansteuerung der Komponenten des Fertigungssystems (1) nach einer Fertigungsvorschrift eine Abfolge von Bohrzyklen und ggf. Nietzyklen und nach einer Messvorschrift zwischen vorbestimmten Bohrzyklen bzw. Nietzyklen vorbestimmte Messzyklen abgearbeitet werden,
wobei in den Messzyklen eine Messbewegung zwischen Messlanze (9) und Materialpaket (4) vorgesehen ist und die Messeinheit (5) während der Messbewegung zyklisch mit einer Abtastrate Entfernungswerte zu verschiedenen Messpunkten (11) ermittelt und aus den Entfernungswerten mindestens einen Geometrieparameter für die jeweilige Bohrung (3) ermittelt und wobei die Messbewegung (19) eine im Wesentlichen spiralförmige Bewegung ist derart, dass die Messpunkte auf einer im Wesentlichen spiralförmigen Messkurve liegen.

23. Verfahren nach Anspruch 22, **dadurch gekennzeichnet, dass** mindestens eine Materiallage (4a,4b) aus einem nichtmetallischen Material, vorzugsweise aus einem Faserverbundmaterial, gebildet ist.

## Claims

1. Production system for the manufacture of aircraft structural components, having a drilling unit (2) for producing holes (3) in a material assembly (4) made of at least two material layers (4a, 4b) for the insertion of fastening elements, in particular riveting elements, and having a measuring unit (5) for determining at least one geometric parameter for a previously produced hole (3), wherein the measuring unit (5) has measuring electronics (6) comprising an optical sensor element (7), measuring optics (8) and a measuring lance (9),
wherein, for the determination of a distance (10) between the measuring lance (9) and a measuring point (11) on the respective hole inner surface (12), the measuring unit (5) is configured to produce an optical measuring beam (13), which emerges from the measuring lance (9) via the measuring optics (8) and strikes the measuring point (11) on the respective hole inner surface (12), wherein, in a measuring cycle, a measuring movement between measuring lance (9) and material assembly (4) is provided and the measuring unit (5) is configured to determine distance values to different measuring points (11) cyclically at a scanning rate during the measuring movement and, from the distance values, to determine at least one geometric parameter for the respective hole (3), wherein the measuring movement (19) is a substantially spiral movement, such that the measuring points are located on a substantially spiral measuring curve,
wherein a production process control system (17) for activating the components of the production system (1) is provided, wherein the production process control system (17) is configured, by means of activating the components of the production system (1), to process a sequence of drilling cycles by means of the drilling unit (2) in accordance with a production instruction and predetermined measuring cycles between pre-determined drilling cycles in accordance with a measuring instruction and
wherein a measuring cycle is aimed only at some of the material layers (4a, 4b), preferably only at a single material layer (4a, 4b), or
wherein a measuring cycle comprises at least two partial measuring cycles (32, 33) and wherein a partial measuring cycle (32) is aimed at one material layer (4a) of the material assembly (4), and wherein a further partial measuring cycle (33) is aimed at a further material layer (4b) of the material assembly (4).

2. Production system according to Claim 1, **characterized in that** the production system (1) has a riveting unit (14) for riveting the material assembly (4).

3. Production system according to Claim 1 or 2, **characterized in that** during a measuring cycle, the measuring lance (9) is inserted into the respective hole (3), and the measuring beam (13) extends substantially transversely relative to the hole axis (3a).

4. Production system according to one of the preceding claims, **characterized in that** the drilling unit (2) and the measuring unit (5) are combined into a processing head (15), preferably in that the drilling unit (2), the riveting unit (14) and the measuring unit (5) are combined into a processing head (15).

5. Production system according to one of the preceding claims, **characterized in that** the production process control system (17) executes a sequence of drilling cycles by means of the drilling unit (2) and riveting cycles by means of the riveting unit (14) in accordance with a production instruction by activating the components of the production system (1), and executes predetermined measuring cycles between predetermined drilling cycles and riveting cycles in accordance with a measuring instruction.

6. Production system according to one of the preceding claims, **characterized in that** the measuring movement (19) has a rotational component, preferably **in that** the rotational component is a rotational movement about the longitudinal axis of the measuring lance (9).

7. Production system according to one of the preceding claims, **characterized in that** the measuring movement (19) has a linear component, preferably **in that** the linear component is oriented in the direction of the longitudinal axis of the measuring lance (9).

8. Production system according to one of the preceding claims, **characterized in that** a drive assembly (20) is provided for the motorized movement of the drilling unit (2) and/or the measuring unit (5) and/or a possibly provided riveting unit (14).

9. Production system according to Claim 8, **characterized in that** the drive assembly (20) is assigned a head drive assembly (21) having at least one drive for the motorized positioning of the processing head (15) relative to the material assembly (4).

10. Production system according to one of the preceding claims, **characterized in that** a geometric parameter is the diameter (D) or the roundness of the respective hole (3).

11. Production system according to one of the preceding claims, **characterized in that** the respective hole (3) has a countersink (25), and **in that** a geometric parameter is the countersink depth (26) or the countersink angle (27) or the countersink diameter (28) for the hole (3).

12. Production system according to one of the preceding claims, **characterized in that** the respective hole (3) has a countersink (25), **in that** the geometric parameter relates to the transition, in particular a transition radius, of the countersink (25) to the hole shaft (29) adjoining the countersink (25).

13. Production system according to one of the preceding claims, **characterized in that** a geometric parameter is the surface finish, in particular the surface structure, of the hole inner surface (12).

14. Production system according to one of the preceding claims, **characterized in that** the geometric parameter is the assembly thickness (30) of the material assembly (4) along the hole axis (3a) .

15. Production system according to one of the preceding claims, **characterized in that** a geometric parameter is the position of the separating plane (31) between two material layers (4a, 4b) of the material assembly (4).

16. Production system according to one of the preceding claims, **characterized in that** a geometric parameter is the width of a gap possibly present between two material layers (4a, 4b) of the material assembly (4).

17. Production system according to one of the preceding claims, **characterized in that** the partial measuring cycles (32, 33) are executed one after another, and **in that** the geometric parameters are each determined separately for the partial measuring cycles (32, 33).

18. Production system according to one of the preceding claims, **characterized in that** at least two partial measuring cycles (32, 33) are carried out directly one after another, preferably **in that** the measuring movement of a first partial measuring cycle (32) immediately and continuously follows the measuring movement of a second partial measuring cycle (33).

19. Production system according to one of the preceding claims, **characterized in that** in at least two different measuring cycles or partial measuring cycles (32, 33), the measuring parameters, in particular the geometries of the measuring movements and/or the speeds of the measuring movements and/or the scanning rates, are different.

20. Production system according to one of the preceding claims, **characterized in that** in a measuring cycle the distances between adjacent measuring points (11) on the hole inner surface (12) define the two-dimensional resolution of the measuring unit (5) for these measuring cycles, **in that** the two-dimensional resolution is adjustable by coordinating the measuring movement, in particular the speed of the measuring movement along a measuring curve on the hole inner surface (12), with the scanning rate, and **in that** within a measuring cycle or in at least two different measuring cycles or partial measuring cycles, the two-dimensional resolutions are adjusted differently.

21. Production system according to one of the preceding claims, **characterized in that** within a measuring cycle, the measuring parameters, in particular the geometry of the measuring movement and/or the speed of the measuring movement and/or the scanning rates, are different.

22. Method for operating a production system (1) according to one of the preceding claims,
**characterized in that**
a production process control system (17) for activating the components of the production system (1) is provided, and **in that** by way of the production process control system (17) by means of activating the components of the production system (1), a sequence of drilling cycles and possibly riveting cycles are executed in accordance with a production instruction and predetermined measuring cycles between pre-determined drilling cycles and riveting cycles are executed in accordance with a measuring instruction,
wherein in the measuring cycles, a measuring movement between measuring lance (9) and material assembly (4) is provided, and, during the measuring movement, the measuring unit (5) determines distance values to different measuring points (11) cyclically at a scanning rate and, from the distance values, determines at least one geometric parameter for the respective hole (3), and wherein the measurement movement (19) is a substantially spiral movement, such that the measuring points are located on a substantially spiral measuring curve.

23. Method according to Claim 22, **characterized in that** at least one material layer (4a, 4b) is formed from a non-metallic material, preferably from a fibre composite material.

## Revendications

1. Système de fabrication destiné à la fabrication de composants structurels d'aéronefs, comprenant une unité de perçage (2) destinée à réaliser des perçages (3) dans un paquet de matériau (4) comportant au moins deux couches de matériau (4a, 4b) en vue de l'insertion d'éléments de fixation, en particulier d'éléments de rivetage, et une unité de mesure (5) destinée à déterminer au moins un paramètre de géométrie d'un perçage (3) réalisé précédemment,
l'unité de mesure (5) comprenant une électronique de mesure (6) pourvue d'un élément de détection optique (7), une optique de mesure (8) et une lance de mesure (9), l'unité de mesure (5) étant conçue pour générer un faisceau de mesure optique (13) pour déterminer une distance (10) entre la lance de mesure (9) et un point de mesure (11) sur la surface de perçage intérieure (12), lequel faisceau de mesure optique sort de la lance de mesure (9) par le biais de l'optique de mesure (8) et est incident au point de mesure (11) sur la surface de perçage intérieure (12), un mouvement de mesure étant prévu dans un cycle de mesure entre la lance de mesure (9) et le paquet de matériau (4) et l'unité de mesure (5) étant conçue pour déterminer de manière cyclique, pendant le mouvement de mesure, à une vitesse d'exploration, des valeurs de distance par rapport à différents points de mesure (11) et pour déterminer à partir des valeurs de distance au moins un paramètre de géométrie du perçage respectif (3), le mouvement de mesure (19) étant un mouvement sensiblement en forme de spirale de sorte que les points de mesure se trouvent sur une courbe de mesure sensiblement en forme de spirale, une commande de processus de fabrication (17) étant prévue pour commander les composants du système de fabrication (1), la commande de processus de fabrication (17) étant conçue pour exécuter, par une commande des composants du système de fabrication (1), une séquence de cycles de perçage à l'aide de l'unité de perçage (2) selon une spécification de fabrication et des cycles de mesure prédéterminés selon une spécification de mesure entre des cycles de perçage prédéterminés et un cycle de mesure étant dirigé uniquement sur une partie des couches de matériau (4a, 4b), de préférence uniquement sur une seule couche de matériau (4a, 4b), ou un cycle de mesure comprenant au moins deux parties de cycle de mesure (32, 33) et une partie de cycle de mesure (32) étant dirigée sur une couche de matériau (4a) du paquet de matériau (4) et une autre partie de cycle de mesure (33) étant dirigée sur une autre couche de matériau (4b) du paquet de matériau (4).

2. Système de fabrication selon la revendication 1, **caractérisé en ce que** le système de fabrication (1) comporte une unité de rivetage (14) destinée à riveter le paquet de matériau (4).

3. Système de fabrication selon la revendication 1 ou 2, **caractérisé en ce que**, pendant un cycle de mesure, la lance de mesure (9) est plongée dans le perçage respectif (3) et le faisceau de mesure (13) s'étend sensiblement transversalement à l'axe de perçage (3a).

4. Système de fabrication selon l'une des revendications précédentes, **caractérisé en ce que** l'unité de perçage (2) et l'unité de mesure (5) sont combinées pour former une tête d'usinage (15), de préférence **en ce que** l'unité de perçage (2), l'unité de rivetage (14) et l'unité de mesure (5) sont combinées pour former une tête d'usinage (15).

5. Système de fabrication selon l'une des revendications précédentes, **caractérisé en ce que** la commande du processus de fabrication (17) exécute par le biais d'une commande des composants du système de fabrication (1), selon une spécification de fabrication, une séquence de cycles de perçage à l'aide de l'unité de perçage (2) et de cycles de rivetage à l'aide de l'unité de rivetage (14) et, selon une spécification de mesure, des cycles de mesure prédéterminés entre des cycles de perçage ou des cycles de rivetage.

6. Système de fabrication selon l'une des revendications précédentes, **caractérisé en ce que** le mouvement de mesure (19) comporte une composante de rotation, de préférence **en ce que** la composante de rotation est un mouvement de rotation sur l'axe longitudinal de la lance de mesure (9).

7. Système de fabrication selon l'une des revendications précédentes, **caractérisé en ce que** le mouvement de mesure (19) comporte une composante linéaire, de préférence **en ce que** la composante linéaire est orientée dans la direction de l'axe longitudinal de la lance de mesure (9).

8. Système de fabrication selon l'une des revendications précédentes, **caractérisé en ce qu'**un dispositif d'entraînement (20) est prévu pour le déplacement motorisé de l'unité de perçage (2) et/ou de l'unité de mesure (5) et/ou d'une unité de rivetage (14) éventuellement prévue.

9. Système de fabrication selon la revendication 8, **caractérisé en ce que** le dispositif d'entraînement (20) est associé à un dispositif d'entraînement de tête (21) comprenant au moins un entraînement destiné au positionnement motorisé de la tête d'usinage (15) par rapport au paquet de matériau (4).

10. Système de fabrication selon l'une des revendications précédentes, **caractérisé en ce qu'**un paramètre de géométrie est le diamètre (D) ou la rotondité du perçage respectif (3).

11. Système de fabrication selon l'une des revendications précédentes, **caractérisé en ce que** le perçage respectif (3) comporte un fraisage (25) et **en ce qu'**un paramètre de géométrie définit la profondeur de fraisage (26) ou l'angle de fraisage (27) ou le diamètre de fraisage (28) pour le perçage (3).

12. Système de fabrication selon l'une des revendications précédentes, **caractérisé en ce que** le perçage respectif (3) comporte un fraisage (25) et **en ce qu'**un paramètre de géométrie est la transition, en particulier un rayon de transition, allant du fraisage (25) à l'arbre de perçage (29) adjacent au fraisage (25) .

13. Système de fabrication selon l'une des revendications précédentes, **caractérisé en ce qu'**un paramètre de géométrie est la texture de surface, en particulier la structure de surface, de la surface de perçage intérieure (12).

14. Système de fabrication selon l'une des revendications précédentes, **caractérisé en ce qu'**un paramètre de géométrie est l'épaisseur de paquet (30) du paquet de matériau (4) le long de l'axe de perçage (3a) .

15. Système de production selon l'une des revendications précédentes, **caractérisé en ce qu'**un paramètre de géométrie est la position du plan de séparation (31) entre deux couches de matériau (4a, 4b) du paquet de matériau (4).

16. Système de fabrication selon l'une des revendications précédentes, **caractérisé en ce qu'**un paramètre de géométrie est la largeur d'un intervalle éventuellement présent entre deux couches de matériau (4a, 4b) du paquet de matériau (4).

17. Système de fabrication selon l'une des revendications précédentes, **caractérisé en ce que** les parties de cycle de mesure (32, 33) sont exécutées l'une après l'autre et **en ce que** les paramètres de géométrie sont déterminés séparément pour les parties de cycle de mesure (32, 33).

18. Système de fabrication selon l'une des revendications précédentes, **caractérisé en ce qu'**au moins deux parties de cycle de mesure (32, 33) sont réalisées immédiatement l'une après l'autre, de préférence **en ce que** le mouvement de mesure d'une première partie de cycle de mesure (32) fait suite directement et de manière continue au mouvement de mesure d'une deuxième partie de cycle de mesure (33).

19. Système de fabrication selon l'une des revendications précédentes, **caractérisé en ce que**, dans au moins deux cycles de mesure différents ou parties de cycle de mesure différentes (32, 33), les paramètres de mesure, en particulier les géométries des mouvements de mesure et/ou les vitesses des mouvements de mesure et/ou les vitesses d'exploration, sont différents.

20. Système de fabrication selon l'une des revendications précédentes, **caractérisé en ce que**, dans un cycle de mesure, les distances entre des points de mesure (11) adjacents sur la surface de perçage intérieure (12) définissent la résolution de surface de l'unité de mesure (5) pour ce cycle de mesure, **en ce que** la résolution de surface peut être déterminée par une adaptation du mouvement de mesure, en particulier de la vitesse du mouvement de mesure, le long d'une courbe de mesure sur la surface de perçage intérieure (12), à la vitesse d'exploration et **en ce que**, dans un cycle de mesure ou au moins deux cycles de mesure différents ou parties de cycle de mesure différentes, les résolutions de surface sont réglées différemment.

21. Système de fabrication selon l'une des revendications précédentes, **caractérisé en ce que**, dans un cycle de mesure, les paramètres de mesure, en particulier la géométrie du mouvement de mesure et/ou la vitesse du mouvement de mesure et/ou les vitesses d'exploration, sont différents.

22. Procédé de fonctionnement d'un système de fabrication (1) selon l'une des revendications précédentes,
**caractérisé en ce que**
une commande de processus de fabrication (17) est prévue pour commander les composants du système de fabrication (1), et **en ce que** la commande de processus de fabrication (17) permet d'exécuter, par une commande des composants du système de fabrication (1), une séquence de cycles de perçage et éventuellement de cycles de rivetage selon une spécification de fabrication et de cycles de mesure prédéterminés, entre des cycles de perçage ou des cycles de rivetage prédéterminés, selon une spécification de mesure,
un mouvement de mesure étant prévu dans un cycle de mesure entre la lance de mesure (9) et le paquet de matériau (4) et l'unité de mesure (5) déterminant de manière cyclique, pendant le mouvement de mesure, à une vitesse d'exploration, des valeurs de distance par rapport à différents points de mesure (11) et déterminant à partir des valeurs de distance au moins un paramètre de géométrie du perçage respectif (3), le mouvement de mesure (19) étant un mouvement sensiblement en forme de spirale de sorte que les points de mesure se trouvent sur une courbe de mesure sensiblement en forme de spirale.

23. Procédé selon la revendication 22, **caractérisé en ce qu'**au moins une couche de matériau (4a, 4b) est formée à partir d'un matériau non métallique, de préférence d'un matériau composite renforcé par des fibres.
